# FASCICULE DE BREVET EUROPEEN

(11) **EP 3 093 527 B1**
(45) Date de publication et mention de la délivrance du brevet: **09.09.2020**
(21) Numéro de dépôt: 16169213.2
(22) Date de dépôt: 11.05.2016
(51) Int. Cl.: F16H 13/02, F16H 55/32, B64C 25/40

(54) **GALET D'ENTRAINEMENT**
ANTRIEBSROLLE
A ROLLER MADE OF COMPRESSIBLE MATERIAL

(30) Priorité: 12.05.2015 FR 1554273
(43) Date de publication de la demande: 16.11.2016
(73) Titulaire: Safran Landing Systems, 78140 Vélizy-Villacoublay (FR)
(72) Inventeur: LARTIGUE, Norbert, 92350 LE PLESSIS ROBINSON (FR); PHELUT, Pierre-Guillaume, 78140 VELIZY-VILLACOUBLAY (FR)
(74) Mandataire: Lavaud, Thomas

(56) Documents cités:
- DE-A1- 10 131 331
- FR-A- 980 305
- FR-A- 1 123 876
- FR-A- 1 162 819
- US-A1- 2010 147 995

## Description

L'invention concerne un galet d'entraînement, par exemple destiné à entraîner en rotation une roue d'un véhicule tel qu'un aéronef.

### ARRIERE PLAN DE L'INVENTION

Un certain nombre de raisons poussent les constructeurs d'aéronefs à tenter de motoriser les roues des aéronefs, en utilisant notamment des actionneurs d'entraînement équipés de moteurs électriques. Une telle motorisation présente en effet des avantages environnementaux et économiques importants (réduction de la consommation de carburant, réduction du bruit pendant les phases de roulage, etc.), et permet de réaliser des fonctions nouvelles : manœuvre de l'aéronef lorsque les moteurs de propulsions sont éteints, roulage en marche arrière, pilotage de l'aéronef au sol à distance, etc.

De nombreuses architectures ont été étudiées par les concepteurs et intégrateurs des actionneurs d'entraînement des roues d'atterrisseurs d'aéronef.

Dans un premier type d'architecture, un actionneur d'entraînement en rotation d'une roue comporte un moteur électrique sans balais, un boîtier de réduction comprenant deux étages de réduction, un dispositif d'embrayage, et un troisième étage de réduction entraînant tangentiellement en rotation la roue via des bielles. Dans ce type d'architecture, un nombre relativement important de pièces sont liées de façon permanente à la roue et subissent les mêmes contraintes mécaniques que celle-ci (accélérations, vibrations, chocs, etc.), ce qui pose un problème de sûreté de fonctionnement pour l'actionneur d'entraînement et, plus généralement, pour la fonction d'entraînement de la roue réalisée par l'actionneur.

Dans un deuxième type d'architecture, le dispositif d'embrayage est remplacé par l'action des bielles qui accouplent et désaccouplent le boîtier de réduction à la roue. Ce type d'architecture est complexe et peu robuste mécaniquement. De plus, l'imprécision de position des bielles, notamment lors de l'accouplement en vitesse et sous déformation de l'atterrisseur et de la roue, oblige à utiliser des bielles volumineuses et donc difficiles à intégrer entre la roue et la jambe de l'atterrisseur.

Dans un troisième type d'architecture, l'actionneur comporte un moteur électrique sans balais, un bloc réducteur comprenant un boîtier de réduction et un pignon relié à la sortie du boîtier de réduction, le pignon engrenant une couronne dentée fixée sur une jante de la roue. L'engagement et le désengagement de l'actionneur sur la roue sont réalisés par rapprochement et éloignement radial du bloc réducteur permettant d'engrener et de désengrener le pignon sur la couronne dentée. Cette architecture présente des oscillations dans la transmission de couple qui réduisent la durée de vie de la chaîne de transmission.

Pour remédier aux inconvénients décrits plus tôt, il a été envisagé d'utiliser une architecture d'actionneur d'entraînement utilisant un ou plusieurs rouleaux de friction (ou galets d'entraînement par friction) associés à des moyens pour appliquer les rouleaux de friction contre la roue ou contre une piste de glissement (ou couronne) montée sur une jante de la roue pour faire tourner la roue. La conception de l'actionneur d'entraînement et du galet d'entraînement lui-même doivent être conformes aux exigences particulièrement contraignantes applicables aux équipements montés au bas d'un atterrisseur, dont l'intégration doit être robuste aux déformations relativement importantes subies notamment par les jantes des roues, et qui doivent résister aux chocs et aux vibrations particulièrement élevés lors des atterrissages et des freinages suivant les atterrissages.

Le document FR 980 305 A divulgue un galet d'entraînement de l'art antérieur comportant un moyeu central, un corps s'étendant autour du moyeu central, et une bande déformable s'étendant autour du corps sur une circonférence du galet d'entraînement.

### OBJET DE L'INVENTION

L'invention a pour objet un galet d'entraînement qui soit adapté à entraîner en rotation une roue d'aéronef malgré les déplacements relatifs subis par le galet et la jante de la roue, et qui soit robuste mécaniquement pour présenter une durée de vie suffisante.

### RESUME DE L'INVENTION

En vue de la réalisation de ce but, on propose un galet d'entraînement tel que défini dans la revendication 1.

Le galet d'entraînement est avantageusement destiné à coopérer avec une piste de roulement rigide présentant des ondulations et montée sur une jante d'une roue d'un atterrisseur d'un aéronef.

La bande déformable disposée sur la circonférence du galet d'entraînement et le corps déformable permettent de compenser les déplacements relatifs entre le galet d'entraînement et la piste de roulement lorsque le galet est pressé contre cette dernière par l'effort radial d'actionnement du système.

La combinaison des ailettes rigides et du corps en matériau déformable permet de transmettre une partie du couple par coopération avec les ondulations de la piste de roulement, l'autre partie du couple étant transmise par friction du matériau déformable en périphérie avec la piste de roulement. On réduit ainsi l'effort radial à développer sur le galet d'entraînement pour un couple à transmettre. La déformation du corps permet aussi d'augmenter la surface de contact entre le galet d'entraînement et la piste de roulement et de diminuer encore les contraintes locales à l'intérieur du galet d'entraînement. La diminution de ces contraintes rend le galet d'entraînement plus robuste et lui confère une durée de vie plus importante.

On propose aussi un système d'entraînement en rotation d'une roue, le système d'entraînement comprenant un galet d'entraînement tel que décrit plus tôt et une piste de roulement montée sur la roue, la piste de roulement présentant des obstacles en forme d'ondulations.

### BREVE DESCRIPTION DES DESSINS

L'invention sera mieux comprise à la lumière de la description qui suit en référence aux figures des dessins annexés parmi lesquelles :
- la figure 1 est une vue en perspective du galet d'entraînement de l'invention représenté dans une position d'engagement avec une piste de roulement montée sur une jante d'une roue, un premier flanc latéral du galet étant visible sur cette figure 1 ;
- la figure 2 est une vue de la face du galet de la figure 1, dans lequel le premier flanc a été retiré pour rendre apparent l'intérieur du galet d'entraînement ;
- la figure 3 est une vue de face partielle de l'intérieur du galet en position d'engagement lorsqu'un effort radial est appliqué sur le galet.

### DESCRIPTION DETAILLEE DE L'INVENTION

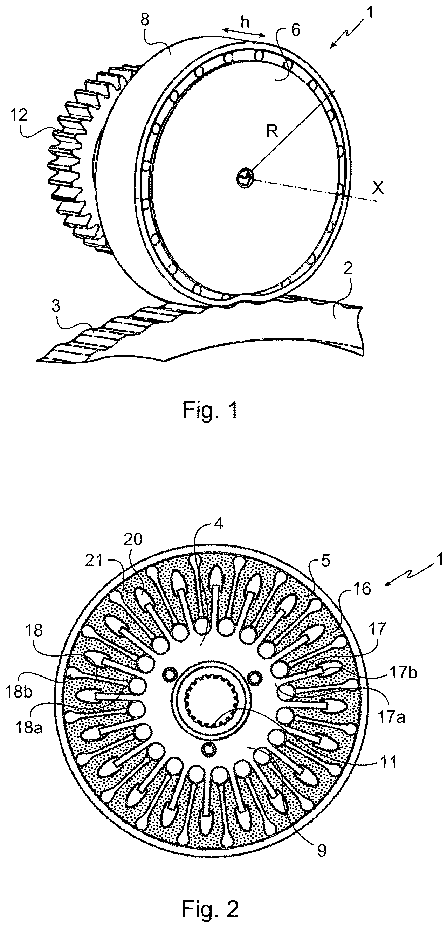

En référence aux figures 1 à 3, le galet d'entraînement de l'invention 1 forme ici avec une piste de roulement rigide 2 un système d'entraînement en rotation d'une roue d'un atterrisseur d'un aéronef.

La piste de roulement rigide 2 constitue une couronne montée sur une face interne d'une jante de la roue coaxialement à la roue, ladite face interne de la jante s'étendant en regard d'une jambe de l'atterrisseur de l'aéronef lorsque la roue est montée au bas de l'atterrisseur.

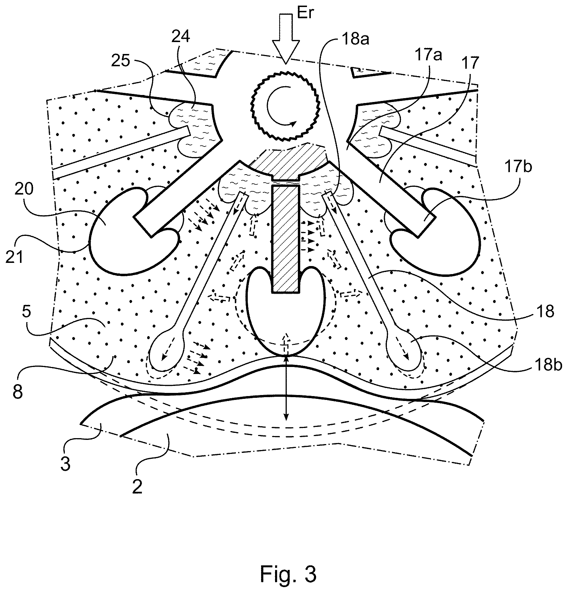

Le galet d'entraînement 1, lorsqu'il est positionné dans une position d'engagement représentée sur les figures 1 et 3, coopère avec des obstacles formés sur la piste de roulement 2, les obstacles étant ici constitués d'ondulations 3 s'étendant sur une circonférence de la piste de roulement 2.

Au repos, le galet d'entraînement 1 présente une forme générale extérieure cylindrique fermée d'axe X, de hauteur h et de rayon externe R. La hauteur h est de préférence inférieure au rayon externe R ce qui confère au galet d'entraînement 1 une forme aplatie.

Le galet d'entraînement 1 comporte un moyeu central 4, un corps 5, des flancs latéraux 6 (l'un d'entre eux n'est pas visible sur les figures mais est disposé sur la face opposée non visible du galet) et une bande fine déformable 8 à forte tenue aux contraintes en compression et cisaillement (forte raideur tangentielle).

Le moyeu central 4 est une pièce métallique comportant une partie courante 9 de forme générale tubulaire, d'axe X et de hauteur h. A l'intérieur de la partie courante 9 du moyeu central 4 est intégré un manchon femelle cannelé 11. Ce manchon femelle cannelé 11 est destiné à accueillir un arbre d'entraînement lui-même relié à un dispositif de réduction 12 (visible sur la figure 1) pour entraîner en rotation le galet d'entraînement 1, transmettre un couple d'entraînement à la roue et entrainer la roue en rotation.

Le corps 5, fabriqué en un matériau déformable, s'étend autour du moyeu central 4. Le matériau déformable est ici un matériau non compressible, adapté à subir des niveaux de compression importants. Le matériau déformable est ici en l'occurrence un matériau de type élastomère.

Les flancs latéraux 6 sont des flancs métalliques destinés à empêcher une expansion axiale selon l'axe X du matériau déformable formant le corps 5, et à augmenter la rigidité du galet d'entraînement 1 en compression et donc ses capacités de tenue aux contraintes de compression mais aussi de cisaillement (contraintes tangentielles). Les flancs latéraux sont fixés au moyeu central 4.

La bande déformable 8 s'étend autour du corps 5 sur une circonférence du galet d'entraînement 1 ou, en d'autres termes, s'étend sur la surface cylindrique extérieure du cylindre constituant la forme extérieure du galet d'entraînement 1. La bande déformable 8 est ici formée d'un tissu de fils métalliques.

Des premières ailettes rigides 17 et des deuxièmes ailettes rigides 18 s'étendent radialement et sont disposées à intervalles réguliers et en alternance dans le corps 5 entre le moyeu central 4 et la bande déformable 8. Par « disposées en alternance », on entend que chaque première ailette 17 est positionnée entre deux deuxièmes ailettes 18 et chaque deuxième ailette 18 est positionnée entre deux premières ailettes 17. Les premières ailettes 17 et les deuxièmes ailettes 18 sont noyées dans le matériau déformable formant le corps 5.

Les premières ailettes 17 comportent chacune une extrémité proximale 17a fixée au moyeu central 4. Dans l'exemple illustré ici, les premières ailettes 17 sont venues de matière avec le moyeu central 4. Chaque première ailette 17 présente une première longueur inférieure à l'épaisseur du corps 5 (ladite épaisseur du corps 5 étant égale à la différence entre le premier rayon R et le deuxième rayon r), ce qui permet d'éviter tout contact entre une première ailette 17 et la bande déformable 8 lorsque la bande déformable 8 est en contact avec la piste de roulement 2 lors de l'application d'un effort radial Er sur le galet d'entraînement 1 et donc sur le matériau déformable du corps 5.

Les deuxièmes ailettes 18, quant à elles, comportent chacune une extrémité distale 18b qui s'étend à proximité de la bande déformable 8. La bande déformable 8 contient ainsi l'écartement entre chaque deuxième ailette 18 lors de l'application d'un effort radial Er sur le galet d'entraînement 1 et donc sur le matériau déformable du corps 5. La rigidité circonférentielle du galet d'entraînement 1 est ainsi augmentée à la périphérie du corps 5. Chaque deuxième ailette 18 présente une deuxième longueur inférieure à l'épaisseur du corps 5. Les deuxièmes ailettes 18 peuvent ainsi se déplacer radialement lors de l'application d'un effort radial Er sur le galet d'entraînement 1 et donc sur le matériau déformable du corps 5, tout en évitant toute interférence avec le moyeu central 4.

La combinaison des premières ailettes 17, des deuxièmes ailettes 18 et du matériau déformable du corps 5 permet de transmettre une partie du couple par friction mais aussi par engrènement, par une conversion de l'effort radial Er en effort tangentiel qui résulte de l'interférence obtenue entre les ondulations 3 de la piste de roulement 2 et le matériau déformable du corps 5 comprimé entre ces ondulations 3. Le déplacement, sous effort radial, du matériau déformable permet aussi d'augmenter la surface de contact entre le galet d'entraînement 1 et la piste de roulement 2. La combinaison des premières ailettes 17, des deuxièmes ailettes 18 et du matériau déformable du corps 5 permet aussi d'améliorer la rigidité en torsion autour de l'axe X du matériau déformable du corps 5 et donc d'améliorer les capacités de ce dernier de transmettre du couple (effort tangentiel ou de cisaillement), grâce à un travail réalisé principalement en compression plutôt qu'en cisaillement.

Avantageusement, le pas angulaire correspondant à l'espacement entre elles des deuxièmes ailettes 18 correspond au pas des ondulations 3.

Des premières cavités déformables 20 s'étendent à proximité d'une extrémité distale 17b de chaque première ailette 17. Plus précisément, l'extrémité distale 17b de chaque première ailette 17 débouche dans la première cavité 20 correspondante.

Chaque première cavité 20 est ici délimitée par un insert métallique 21 fixé à l'extrémité distale 17b de la première ailette 17. Les premières cavités 20 présentent au repos une forme elliptique dont une plus grande longueur s'étend radialement. Les premières cavités 20 sont remplies d'air (ou d'un matériau de raideur plus faible que le matériau déformable du corps 5). Elles se déforment sous l'application d'un effort radial Er sur le galet d'entraînement 1 et donc sur le matériau déformable du corps 5 et tendent à prendre une forme circulaire. Les premières cavités 20 exercent ainsi une pression sur le matériau déformable du corps 5 contenu sous l'axe X par les flancs latéraux 6 et donc augmentent la pression exercée sur le matériau déformable du corps 5 et donc sa raideur dans une direction tangentielle (ou de torsion) dans les zones situées entre les deuxièmes ailettes 18, et dans une direction axiale (ou de compression) entre les flancs 6.

La capacité du galet d'entraînement 1 à transmettre du couple est donc améliorée et la rigidité du galet d'entraînement 1 en torsion et en compression est augmentée.

Des deuxièmes cavités déformables 24 s'étendent chacune au niveau d'une extrémité proximale 18a de chaque deuxième ailette 18. Chaque deuxième cavité 24 est formée par une poche 25 disposée dans le matériau déformable du corps 5 en s'étendant contre le moyeu central 4 entre les extrémités proximales 17a de deux premières ailettes 17. Les deuxièmes cavités 24 sont remplies au moins partiellement par un fluide hydraulique ou par un autre matériau. Un distributeur hydraulique connecte fluidiquement les deuxièmes cavités 24, c'est-à-dire assure une distribution de fluide hydraulique entre les deuxièmes cavités 24 adjacentes.

Lors de l'application d'un effort radial Er sur le galet d'entraînement 1, la deuxième ailette 18 se situant à la perpendiculaire du contact entre le galet d'entraînement 1 et la piste de roulement 2 se rétracte radialement vers le centre du moyeu central 4 d'une distance correspondant à une valeur en débattement du matériau déformable du corps 5. La deuxième ailette 18 vient alors comprimer la deuxième cavité 24 située au niveau de son extrémité proximale 18a, ce qui a pour effet d'augmenter la pression dans les deuxièmes cavités déformables 24 adjacentes via le distributeur hydraulique. Cette augmentation de la pression dans les deuxièmes cavités déformables 24 adjacentes a pour effet inverse de faire saillir les deuxièmes ailettes 18 adjacentes et d'étirer le matériau déformable du corps 5 se situant au niveau de l'extrémité distale 18b des deuxièmes ailettes 18 adjacentes jusqu'au contact avec la bande déformable 8 et donc avec la piste de roulement 2. La surface de matériau déformable du corps 5 en contact avec la piste de roulement 2 (via la bande déformable 8) est ainsi augmentée, ce qui permet de répartir l'effort radial Er à transmettre sur une plus grande portion angulaire du matériau déformable du corps 5 et de diminuer les contraintes locales au sein de ce matériau déformable du corps 5. De plus, le nombre d'ondulations 3 de la piste de roulement 2 en contact avec le galet d'entraînement 1 est également augmenté, ce qui favorise le rapport de conduite des ondulations 3 et optimise l'efficacité et la proportion de transmission du couple par interférence. De plus, la surface de contact entre la bande de matériau déformable 8 et la piste de roulement est également augmentée, ce qui a donc pour effet vertueux de diminuer les contraintes locales de cisaillement (ou de torsion) dues à la transmission du couple dans la bande fine de matériau déformable 8.

L'invention n'est pas limitée au mode de réalisation particulier qui vient d'être décrit, mais, bien au contraire, couvre toute variante entrant dans le cadre de l'invention tel que défini par les revendications.

Le matériau déformable du corps du galet n'est pas nécessairement un élastomère.

On a indiqué que les deuxièmes ailettes comportent chacune une extrémité distale qui s'étend à proximité de la bande déformable. On note que les extrémités distales des deuxièmes ailettes peuvent être fixées ou non à la bande déformable. Elles peuvent en particulier être fixées à l'armature propre de la bande déformable ou bien à toute autre armature se situant en périphérie des deux matériaux du corps 5 et de la bande 8.

Bien que l'on ait indiqué que la bande déformable est ici formée d'un tissu de fils métalliques, cette bande déformable peut être fabriquée avec tout type de matériau déformable, et peut comporter tout type d'armature : tissée ou non, noyée, métallique ou céramique, comprenant tout type de matériau d'armement unidirectionnel ou multidirectionnel, etc.

Bien que l'on ait indiqué que les flancs sont des flancs métalliques, ceux-ci peuvent parfaitement être fabriqués avec un ou des matériaux différents : matériau composite, armé, fibré, etc.

Bien que l'on ait décrit que les deuxièmes cavités déformables sont formées chacune par une poche disposée dans le matériau déformable, elles pourraient parfaitement être réalisées par de simples espaces creux au niveau de la deuxième extrémité des deuxièmes ailettes.

Bien que l'on ait indiqué que la piste de roulement comporte des ondulations, celle-ci peut parfaitement être lisse ou bien rugueuse sans ondulation.

Bien que l'on ait décrit un système comprenant un galet et une piste, l'invention peut bien sûr être mise en œuvre en associant une pluralité de galets et une piste.

On a indiqué que les deuxièmes cavités sont connectées fluidiquement entre elles par un distributeur hydraulique. On note qu'il n'est pas nécessaire que toutes les deuxièmes cavités soient connectées fluidiquement entre elles par le même distributeur, et qu'il est possible que plusieurs distributeurs connectent entre elles une pluralité de deuxièmes cavités adjacentes. De plus, la connexion fluidique n'est pas nécessairement réalisée via un distributeur hydraulique mais peut l'être par un système de restriction calibré ou par un ou des gicleurs.

## Revendications

1. Galet d'entraînement (1) comportant :
- un moyeu central (4) ;
- un corps (5) s'étendant autour du moyeu central;
- une bande déformable (8) s'étendant autour du corps sur une circonférence du galet d'entraînement (1) ; **caractérisé en ce que** le corps (5) est fabriqué en un matériau déformable, et **en ce que** le galet d'entraînement comporte des premières ailettes rigides (17) et des deuxièmes ailettes rigides (18) disposées en alternance et s'étendant radialement dans le corps (5) entre le moyeu central et la bande déformable, les premières ailettes présentant une extrémité proximale (17a) fixée au moyeu central et les deuxièmes ailettes présentant une extrémité distale (18b) qui s'étend à proximité de la bande déformable.

2. Galet selon la revendication 1, dans lequel le corps (5) comporte des premières cavités (20) à proximité d'une extrémité distale (17b) de chaque première ailette (17) .

3. Galet selon la revendication 2, dans lequel l'extrémité distale (17b) de chaque première ailette (17) débouche dans la première cavité (20) correspondante.

4. Galet selon l'une des revendications 2 ou 3, dans lequel les premières cavités sont chacune délimitées par un insert métallique (21) fixé à l'extrémité distale de la première ailette correspondante.

5. Galet selon l'une des revendications 2 à 4, dans lequel les premières cavités (20) présentent une forme elliptique dont une plus grande longueur s'étend radialement.

6. Galet selon l'une des revendications précédentes, dans lequel le corps (5) comporte des deuxièmes cavités (24) qui s'étendent chacune au niveau d'une extrémité proximale (18a) de chaque deuxième ailette (18).

7. Galet selon la revendication 6, dans lequel chaque deuxième cavité (24) s'étend entre le moyeu central et les extrémités proximales (17a) de deux premières ailettes (17).

8. Galet selon l'une des revendications 6 ou 7, dans lequel les deuxièmes cavités sont remplies au moins partiellement par un fluide hydraulique.

9. Galet selon la revendication 8, dans lequel les deuxièmes cavités sont fluidiquement connectées.

10. Galet selon la revendication 9, dans lequel la connexion fluidique est réalisée via un distributeur hydraulique ou un système de restriction calibré ou un gicleur.

11. Galet selon l'une des revendications précédentes, dans lequel la bande déformable (8) comporte une armature.

12. Galet selon la revendication 11, dans lequel l'armature est tissée.

13. Galet selon l'une des revendications 11 ou 12, dans lequel l'armature est métallique ou céramique.

14. Galet selon l'une des revendications précédentes, le galet comportant deux flancs latéraux (6) destinés à empêcher une expansion axiale du matériau déformable formant le corps (5).

15. Système d'entraînement en rotation d'une roue, le système d'entraînement comprenant au moins un galet d'entraînement selon l'une des revendications précédentes et une piste de roulement montée sur la roue, la piste de roulement (2) présentant des obstacles en forme d'ondulations (3).

16. Système d'entraînement selon la revendication 15, dans lequel le pas des deuxièmes ailettes (18) correspond au pas des ondulations (3).

## Patentansprüche

1. Antriebsrolle (1), umfassend:
- eine zentrale Nabe (4);
- einen Körper (5), der sich um die zentrale Nabe erstreckt;
- ein verformbares Band (8), das sich um den Körper auf einem Umfang der Antriebsrolle (1) erstreckt;
**dadurch gekennzeichnet, dass** der Körper (5) aus einem verformbaren Material hergestellt ist, und dass die Antriebsrolle erste starre Rippen (17) und zweite starre Rippen (18) umfasst, die abwechselnd angeordnet sind und sich radial in dem Körper (5) zwischen der zentralen Nabe und dem verformbaren Band erstrecken, wobei die ersten Rippen ein proximales Ende (17a) aufweisen, das an der zentralen Nabe befestigt ist, und die zweiten Rippen ein distales Ende (18b) aufweisen, das sich in der Nähe des verformbaren Bandes erstreckt.

2. Rolle nach Anspruch 1, bei der der Körper (5) erste Hohlräume (20) in der Nähe eines distalen Endes (17b) jeder ersten Rippe (17) umfasst.

3. Rolle nach Anspruch 2, bei der das distale Ende (17b) jeder ersten Rippe (17) in den entsprechenden ersten Hohlraum (20) mündet.

4. Rolle nach einem der Ansprüche 2 oder 3, bei der die ersten Hohlräume jeweils von einem Metalleinsatz (21) begrenzt sind, der an dem distalen Ende der entsprechenden ersten Rippe befestigt ist.

5. Rolle nach einem der Ansprüche 2 bis 4, bei der die ersten Hohlräume (20) eine elliptische Form aufweisen, deren größere Länge sich radial erstreckt.

6. Rolle nach einem der vorhergehenden Ansprüche, bei der der Körper (5) zweite Hohlräume (24) umfasst, die sich jeweils im Bereich eines proximalen Endes (18a) jeder zweiten Rippe (18) erstrecken.

7. Rolle nach Anspruch 6, bei der sich jeder zweite Hohlraum (24) zwischen der zentralen Nabe und den proximalen Enden (17a) zweier erster Rippen (17) erstreckt.

8. Rolle nach einem der Ansprüche 6 oder 7, bei der die zweiten Hohlräume zumindest teilweise mit einem Hydraulikfluid gefüllt sind.

9. Rolle nach Anspruch 8, bei der die zweiten Hohlräume in Fluidverbindung stehen.

10. Rolle nach Anspruch 9, bei der die Fluidverbindung über einen Hydraulikverteiler oder ein System mit kalibrierter Beschränkung oder eine Düse hergestellt ist.

11. Rolle nach einem der vorhergehenden Ansprüche, bei der das verformbare Band (8) eine Bewehrung umfasst.

12. Rolle nach Anspruch 11, bei der die Bewehrung gewebt ist.

13. Rolle nach einem der Ansprüche 11 oder 12, bei der die Bewehrung aus Metall oder Keramik ist.

14. Rolle nach einem der vorhergehenden Ansprüche, wobei die Rolle zwei seitliche Flanken (6) umfasst, die dazu bestimmt sind, eine axiale Ausdehnung des den Körper (5) bildenden verformbaren Materials zu verhindern.

15. Drehantriebssystem zum Drehantrieb eines Rades, wobei das Antriebssystem mindestens eine Antriebsrolle nach einem der vorhergehenden Ansprüche und eine auf dem Rad montierte Rollbahn umfasst, wobei die Rollbahn (2) Hindernisse in Form von Wellen (3) umfasst.

16. Antriebssystem nach Anspruch 15, bei dem der Abstand zweier Rippen (18) dem Abstand der Wellen (3) entspricht.

## Claims

1. A drive roller (1) comprising:
• a central hub (4);
• a body (5) extending around the central hub;
• a deformable band (8) extending around the body over a circumference of the drive roller (1); **characterized in that** the body (5) is made of a deformable material, and **in that** the drive roller comprises first rigid fins (17) and second rigid fins (18) arranged in alternation and extending radially inside the body (5) between the central hub and the deformable band, the first fins presenting a proximal end (17a) fastened to the central hub and the second fins presenting a distal end (18b) that extends in the proximity of the deformable band.

2. A roller according to claim 1, wherein the body (5) has respective first cavities (20) in the proximity of a distal end (17b) of each first fin (17).

3. A roller according to claim 2, wherein the distal end (17b) of each first fin (17) leads into the corresponding first cavity (20).

4. A roller according to claim 2 or claim 3, wherein each first cavity is defined by a metal insert (21) fastened to the distal end of the corresponding first fin.

5. A roller according to any one of claims 2 to 4, wherein the first cavities (20) are elliptical in shape of long direction that extends radially.

6. A roller according to any preceding claim, wherein the body (5) includes second cavities (24), each extending at a proximal end (18a) of a corresponding second fin (18).

7. A roller according to claim 6, wherein each second cavity (24) extends between the central hub and the proximal ends (17a) of two first fins (17).

8. A roller according to claim 6 or claim 7, wherein the second cavities are filled at least in part with a hydraulic fluid.

9. A roller according to claim 8, wherein the second cavities are in fluid flow connection.

10. A roller according to claim 9, wherein the fluid flow connection is made via a hydraulic manifold or a system of calibrated constrictions or a nozzle.

11. A roller according to any preceding claim, wherein the deformable band (8) includes reinforcement.

12. A roller according to claim 11, wherein the reinforcement is woven.

13. A roller according to claim 11 or claim 12, wherein the reinforcement is made of metal or ceramic.

14. A roller according to according to any preceding claim, the roller having two lateral flanks (6) for preventing axial expansion of the deformable material forming the body (5).

15. A drive system for driving a wheel in rotation, the drive system comprising at least one drive roller according to any preceding claim and a running track mounted on the wheel, the running track (2) presenting obstacles in the form of undulations (3).

16. A drive system according to claim 15, wherein the pitch of the second fins (18) corresponds to the pitch of the undulations (3).
